# EUROPÄISCHE PATENTSCHRIFT

(11) **EP 1 058 106 B1**
(45) Veröffentlichungstag und Bekanntmachung des Hinweises auf die Patenterteilung: **30.07.2003**
(21) Anmeldenummer: 00111342.2
(22) Anmeldetag: 26.05.2000
(51) Int. Cl.: G01M 13/02, G01L 5/00

(54) **Wälzpaarung**
Pairing of rolling elements
Appariement des corps roulants

(30) Priorität: 02.06.1999 DE 19925460
(43) Veröffentlichungstag der Anmeldung: 06.12.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: Kösel, hans-henning Dipl.-Ing.,, 38106 Braunschweig (DE); Lange, Nikolas Dipl.-Ing., 38112 Braunschweig (DE); Brand, Jochen, Dr.-Ing.-, 38126 Braunschweig (DE); Lüthje, Holger, Dipl.-Ing.-, 25469 halstenbek (DE)
(74) Vertreter: Pfenning, Meinig & Partner

(56) Entgegenhaltungen:
- EP-A- 0 685 297
- US-A- 3 952 418
- US-A- 5 176 053

## Beschreibung

Die vorliegende Anmeldung betrifft eine Wälzpaarung, insbesondere eine Zahnradpaarung mit zwei ineinandergreifenden Zahnrädern. Derartige Wälzpaarungen werden in zahlreichen Bauteilen oder Baugruppen von Maschinen -nachfolgend zusammenfassend als Maschinenelemente bezeichnet- eingesetzt. Bei ineinandergreifenden Wälzpaarungen ergibt sich aus deren Funktion heraus bzw. aus Störeffekten ein Relativbewegungszustand zwischen den sich jeweils berührenden und kraftübertragenden Oberflächen. Aufgrund dieser Relativbewegung treten in sich berührenden Teilen immer Reibungseffekte auf, die die jeweiligen Oberflächen durch Kräfte wie Zug-, Druck- oder Scherkräfte beanspruchen. Außerdem ergibt sich eine Beanspruchung der Oberflächen durch die aufgebrachten äußeren Lasten. Die beschriebene Kombination von Zug-, Druck- sowie Scherkräften und gegebenenfalls Pressung führt in den Oberflächen zu extrem hohen mechanischen Spannungen, großen Deformationen, hohen Temperaturen und insgesamt zum Verschleiß und nach einiger Standzeit schließlich zum Versagen der Zahnräder.

Eine kontinuierliche Erfassung dieser in den Oberflächen auftretenden Beanspruchungen und des durch sie hervorgerufenen Verschleißes würde wichtige Erkenntnisse für eine verbesserte Dimensionierung entsprechender Wälzpaarungen liefern sowie neuartige Strategien zur Regelung der Betriebsparameter und zur zustandsabhängigen Wartung und Revision dieser Maschinenelemente ermöglichen.

Aus der EP 0 685 297 A1 ist es bekannt, Werkzeuge für die Umform- und Zerspanungstechnik unmittelbar auf der Verschleißfläche des Werkzeuges mit Sensoren zu versehen, die in Dünnschichttechnik aufgebaut sind. Die EP 0 685 297 A1 offenbart dies beispielsweise für Wendeschneidplatten. Die dort offenbarten Lösungen sind jedoch beispielsweise bei einer Zahnradpaarung aufgrund der gegenläufigen Drehung der ineinandergreifenden Zahnräder nicht anwendbar.

Die EP 0 844 469 A1 offenbart ein Gleitlager mit einer Achse oder Lagerschale, wobei das Gleitlager Sensoren zur Erfassung der dort auftretenden Kräfte aufweist.

Die WO 87/04236 offenbart eine mechanische Komponente, auf der in Dünnschichttechnik elektrische Schaltkreise und Wandler aufgebracht sind. Auch diese Schrift beschäftigt sich jedoch nicht mit der Bestimmung von Kräften und dergleichen auf ineinander einkreisenden, einer Relativbewegung unterliegenden Wälzoberflächen.

Aufgabe der vorliegenden Erfindung ist es daher, eine Wälzpaarung zur Verfügung zu stellen, bei der eine lokale und kontinuierliche Messung verschiedener Parameter, wie beispielsweise mechanischer Spannungen, Deformationen, Temperatur oder Verschleiß der einzelnen ineinandergreifenden Oberflächen lokal und kontinuierlich erfaßt werden können.

Diese Aufgabe wird durch die Wälzpaarung nach Anspruch 1 gelöst. Vorteilhafte Weiterbildungen der erfindungsgemäßen Wälzpaarungen werden in den abhängigen Ansprüchen gegeben.

Bei der erfindungsgemäßen Wälzpaarung, beispielsweise einer Zahnradpaarung, sind entsprechende Sensoren, wie beispielsweise Temperatur, Druck, Kraft, Verformungs- oder Verschleißsensoren direkt auf oder in den Flanken der einzelnen Elemente der Wälzpaarung, beispielsweise der Zähne der beiden beteiligten Zahnräder, angeordnet. Dadurch ist eine lokale und kontinuierliche Messung der tatsächlich auftretenden Parameter möglich. Die Kenntnis dieser Parameter ermöglicht eine verbesserte Dimensionierung der einzelnen Oberflächen, beispielsweise Zahnflanken von Zahnrädern sowie vollständig neue Möglichkeiten, das Maschinenelement bzw. die darin enthaltenen Oberflächen zustandsabhängig zu warten bzw. den Zustand der einzelnen Elemente, beispielsweise der Zahnräder, zu regulieren. Die von den Sensoren abgegebenen Signale werden zur weiteren Aufbereitung und Auswertung an ortsfeste Signalverarbeitungssysteme übertragen, gegebenenfalls nach einer ersten Auswertung und Kodierung.

Die Sensoren besitzen dabei einen Dünnschichtaufbau, der mit einer Anbindungs- und Isolationsschicht beginnt, die die sensorische Schicht elektrisch von dem Zahnrad isoliert, wenn dieses aus elektrisch leitendem Material besteht. Anschließend wird eine sensorische Schicht mit entsprechenden Dünnschicht-Sensorelementen auf die Oberfläche eines Elementes der Wälzpaarung aufgebracht und zuletzt über diese sensorische Schicht eine abschließende tribologische Oberfläche als Schicht aufgebracht, die den Sensor nach außen abschließt und mit der übrigen Oberfläche die kraftübertragende Fläche bildet.

In der sensorischen Schicht können dabei mehrere Sensoren für verschiedene Parameter eingebracht werden, beispielsweise in Form eines Arrays. Dadurch kann zugleich beispielsweise die Temperatur, der Verschleiß und die auf der Oberfläche aufgebrachte Kraft bzw. der Druck bestimmt werden. Mittels laserlithographischer Verfahren kann die sensorische Schicht auch dreidimensional strukturiert werden. Auch photolithographische Verfahren können verwendet werden, um die einzelnen Schichten zu erzeugen.

Als Sensoren eignen sich resistive Meßprinzipien, beispielsweise für die Temperatur, wobei mit Hilfe von Widerstandsänderungen auch unterschiedliche Zustandsgrößen erfaßt werden können. Es eignen sich weiterhin Dehnungsmeßbrücken oder auch piezoresistive oder auch piezoelektrische Dünnschichtsensoren für die erfindungsgemäße Wälzpaarung. Vorteilhafterweise können die einzelnen Sensoren als Multifunktionssensor ausgebildet sein, bei dem aus einem Schichtmaterial der sensorischen Schicht durch angepaßte Formgebung der Sensor und der Leiterstrukturen verschiedene Sensoren erzeugt werden.

Zwischen der sensorischen Schicht und der tribologischen Funktionsschicht kann auch eine weitere Isolationsschicht eingebracht werden, so daß die sensorische Schicht auch gegenüber der Oberfläche des Elementes der Wälzpaarung isoliert ist. Die tribologische Funktionsschicht kann vorteilhafterweise aus diamantähnlichen, auf kohlenstoffbasierenden amorphen Schichtsystemen, beispielsweise DLC oder Me:DLC, aus Titannitrid oder Chromnitrid, bestehen.

Im folgenden werden einige Beispiele einer erfindungsgemäßen Zahnradpaarung beschrieben werden. Es zeigen
- Figur 1: eine Zahnradflanke einer Zahnradpaarung;
- Figur 2: den Aufbau eines Sensors;
- Figur 3: eine schematische Darstellung der Energieversorgung, Signalerfassung, Signalaufbereitung und Signalweiterverarbeitung;
- Figur 4: einen Wälzlager-Innenring und
- Figur 5: ein Wälzlager mit Übertragungseinrichtungen für Energie und Signale.

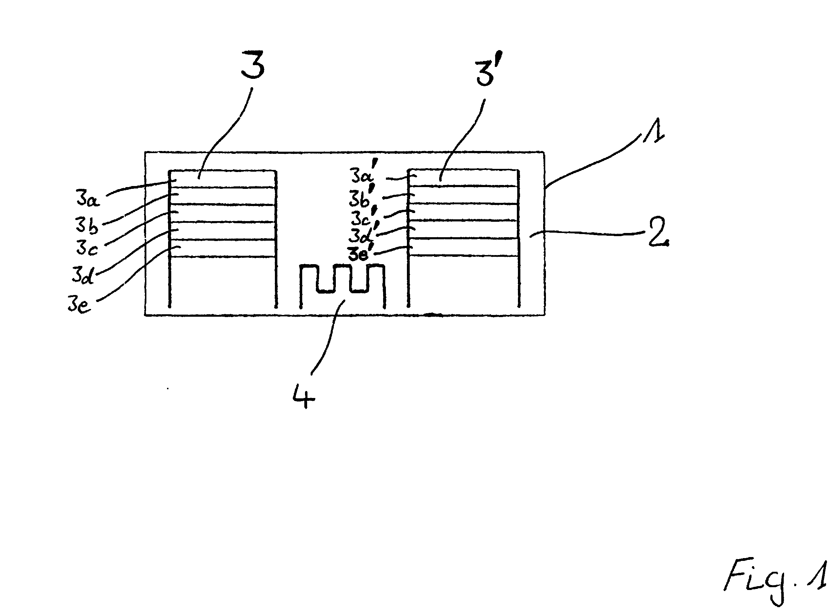

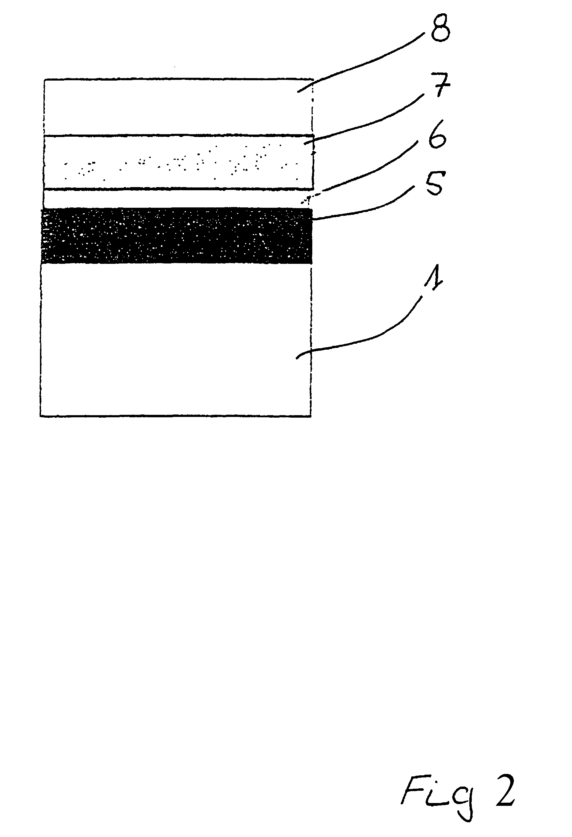

Figur 1 zeigt einen Zahn eines Zahnrades 1 mit einer Zahnflankenoberfläche 2. Auf dieser Zahnflankenoberfläche 2 sind zwei Verschleißsensoren 3, 3' und ein Temperatursensor 4 in Dünnschichttechnologie wie oben beschrieben und auch in Figur 2 dargestellt, aufgebracht. Die Lage der Sensoren wurde dabei so gewählt, daß die Temperatur in den Zonen mit maximaler mechanischer Belastung gemessen wird. Der Verschleiß wird durch die sequentielle Durchtrennung von Widerstandsbahnen 3a bis 3e bzw. 3a' bis 3e' gemessen. Die Dicke der Widerstandsbahn ist dabei so abgestimmt, daß eine lokale Zuordnung erfolgen kann.

Durch die Verschleißsensoren 3, 3' läßt sich nun auch ohne visuelle Kontrolle der Zahnräder ein Schichtabtrag detektieren und mit Hilfe dieser Daten eine bedarfsgerechte Planung von Wartungs- und Revisionsarbeiten durchführen. Dies ist insbesondere bei hohen Ausfall- und Stillstandskosten oder bei hohen Risiken im Falle eines Versagens der Verzahnung, z.B. in Anlagengetrieben oder in Getrieben von Flugtriebwerken von großem Vorteil. Funktionsstörungen der Getriebeschmierung lassen sich dagegen indirekt über eine Temperaturüberwachung im Ölreservoir erkennen. Die Temperatur im Zahneingriff, die durch den Sensor 4 erfaßt wird, kann jedoch dabei dennoch erheblich über den im Ölreservoir gemessenen Werten liegen. Der Temperatursensor 4 ermöglicht also ein wesentlich zuverlässigere und mit wesentlich geringerer Verzögerung ansprechende Überwachung und damit die Vermeidung von Überhitzungsschäden.

Figur 2 zeigt den Schichtaufbau eines Dünnschichtsensors, wie er gemäß der Erfindung in die Zahnflanke der Zahnräder einer Zahnradpaarung eingebracht wird. Dieser Schichtaufbau weist zwei dielektrische Schichten 5 und 7 sowie eine dazwischen eingebettete sensorische Schicht 6 auf. Figur 2 zeigt dabei einen Querschnitt, wobei auf die Zahnflanke eines Zahnrades 1 zuerst eine erste isolierende Schicht 5, danach die sensorische Schicht 6 und auf diese eine weitere isolierende Schicht 7 aufgebracht wird. Den Abschluß bildet eine auf die isolierende Schicht 7 aufgebrachte tribologische Funktionsschicht, beispielsweise aus Me:DLC, Titannitrid oder Chromnitrid. Diese tribologische Funktionsschicht schließt mit der äußeren Oberfläche der Zahnflanke ab und bildet einen Teil der Oberfläche der Zahnflanke.

Die elektrisch isolierende Schicht 5 kann jedoch entfallen, wenn das Zahnrad 1 selbst aus elektrisch isolierendem Material besteht.

Die Beschichtungsprozesse zur Herstellung eines derartigen Sensors werden in diesem Fall so koordiniert, daß das gesamte System in zwei Prozessen hergestellt wird, zuzüglich der erforderlichen Strukturierung der sensorischen Ebene. Der gesamte Schichtaufbau stellt eine technologische Einheit dar, die materialspezifisch als auch morphologisch optimiert wird, so daß sie die extremen mechanischen und thermischen Belastungen auf Zahnflanken toleriert.

Erfindungsgemäß können zur Erzeugung der einzelnen Schichten CVD- oder PVD-Beschichtungsverfahren angewandt werden. Die Schichtdicken betragen typischerweise zwischen 1 µm und 10 µm.

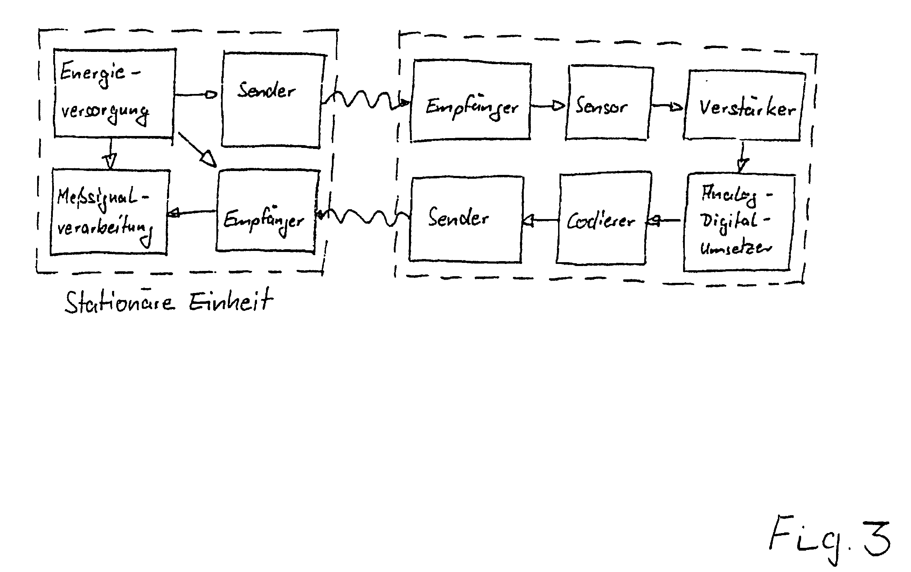

Da bei einer Zahnradpaarung definitionsgemäß eine Relativbewegung zwischen den Zahnflanken der einzelnen Zahnräder auftritt, werden vorteilhafterweise die Versorgungsenergie und die gemessenen Signale zwischen der Zahnradpaarung und einer ortsfesten Aufbereitungs- und Auswerteeinheit berührungslos übertragen. Eine derartige berührungslose Übertragung ist in Figur 3 dargestellt. Diese zeigt eine stationäre Einheit, die eine Energieversorgung und einen Sender enthält, um die Energie zu dem Zahnrad zu übertragen. Weiterhin enthält die stationäre Einheit einen Empfänger für Meßsignale und eine Meßsignalverarbeitung, durch die die Signale aufbereitet und weiterverarbeitet werden können.

In dem Zahnrad sind neben dem erfindungsgemäßen Sensor ein Empfänger für die von der stationären Einheit ausgesandten Energie und zur Weiterleitung dieser empfangenen Energie an den Sensor und die weiteren elektronischen Komponenten in dem Zahnrad angeordnet. Weiterhin befindet sich in dem Zahnrad ein Verstärker zur Verstärkung der vom Sensor erzeugten Meßsignale, ein Analog-Digital-Umsetzer, um die Meßsignale in digitale Signale umzuwandeln, ein Kodierer, um die digitalen Signale zu kodieren und einen Sender, um die kodierten Signale zum Empfänger in der stationären Einheit zu senden.

Für die Energieversorgung, die Meßsignalverstärkung und Aufbereitung sowie die Analog-Digital-Umsetzung und die Kodierung können dabei grundsätzlich Elektronikschaltungen herkömmlicher Bauart zum Einsatz kommen. Für die Sender-Empfänger-Kombination eignen sich vorteilhafterweise induktive oder optische Übertragungsprinzipien.

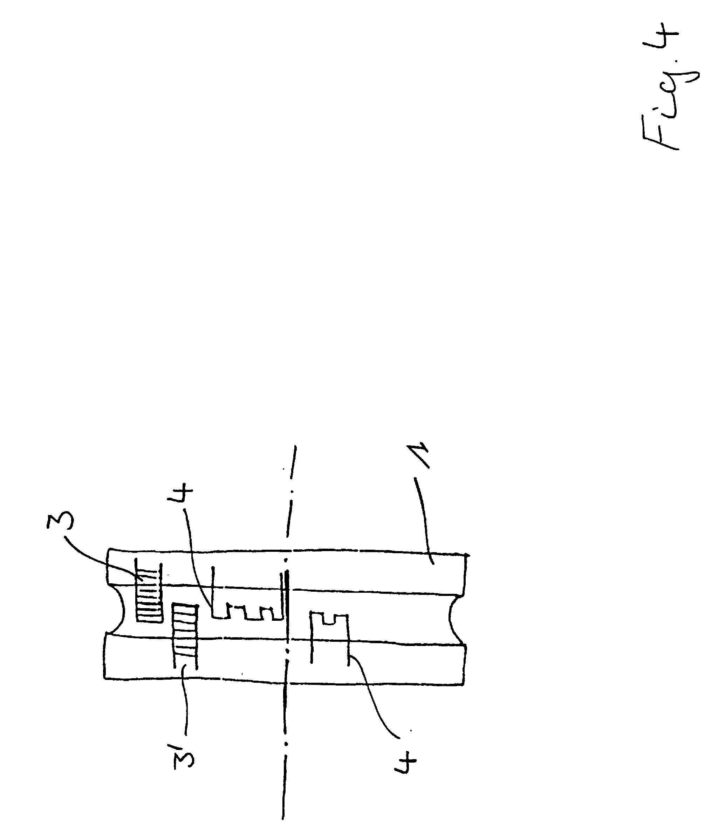

Figur 4 zeigt ein weiteres Beispiel für eine Wälzpaarung mit Hertzscher Pressung, wobei hier ein Lagerring 1 eines Wälzlagers orientierend mit einer funktionsoptimierten Beschichtung versehen ist. Analog zu den vorigen Beispielen können auch weitere Schichten mit spezifischen sensorischen Eigenschaften in das Funktionsschichtsystem integriert werden. Die Beschichtungsverfahren und die typischen Schichtdicken sind wie oben dargestellt.

Der Lagerring 1 weist zwei Verschleißsensoren 3, 3' und zwei Temperatursensoren 4, 4' auf. Die von diesen Verschleiß- und Temperatursensoren und gegebenenfalls durch weitere, hier nicht dargestellte Drucksensoren gewonnenen Daten können für Maschinen, deren Lager in niedrig-viskosen Medien, z.B. Wasser, laufen, zur Erfassung von lagerschädigender Kavitation bzw. kavitationsbegünstigender Betriebszustände eingesetzt werden. Durch die Verschleißsensoren 3, 3' läßt sich auch ohne visuelle Kontrolle der Lager des Wälzlagerrings 1 ein Schichtabtrag erfassen und mit Hilfe dieser Daten eine bedarfsgerechte Planung von wartungsund Revisionsarbeiten durchführen. Mit Hilfe dieser sämtlicher über die integrierten Sensoren des Lagerrings 1 gewonnenen Daten können insgesamt kavitationsgefährdete Betriebsbereiche über Steuerung oder Regelung geeigneter Betriebsparameter für die Wälzpaarung vermieden werden.

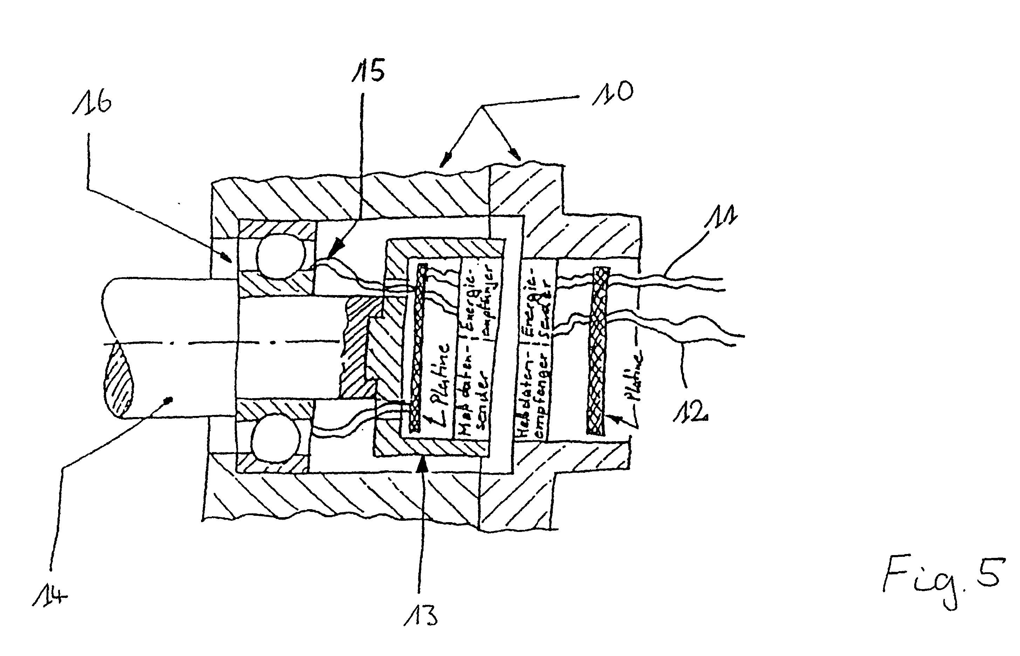

Figur 5 zeigt ein weiteres Beispiel für den Einsatz von bewegten und ortsfesten Elektronikkomponenten zur Energie- und Meßsignalübertragung von bzw. zu einem mit Dünnschichtsensorik bestückten Wälzlager in einer Maschine. Figur 5 zeigt dabei ein Maschinengehäuseteil 10, in dem eine rotierende Welle 14 gelagert ist. Die rotierende Welle ist in einem Lagerinnenring 16 gelagert, der seinerseits die erfindungsgemäße Dünnschichtsensorik, hier nicht im Detail dargestellt, aufweist. Von dieser Sensorik erstrecken sich Anschlußleitungen 15 zu einem Elektronikträger 13, der mit der Welle 14 rotiert. Auf dem Elektronikträger ist eine Platine angeordnet, die sowohl als Energieempfänger als auch als Meßdatensender wirkt. In dem Maschinengehäuseteil 10, dem rotierenden Elektronikträger 13 gegenüber angeordnet, befindet sich ein Meßdatenempfänger und ein Energiesender. Diese nehmen die Meßsignale von dem Meßdatensender des Elektronikträgers 13 berührungslos auf und senden ihrerseits Versorgungsenergie berührungslos an den Energieempfänger des Elektronikträgers 13. Der Meßdatenempfänger und der Energiesender, die in dem Maschinengehäuseteil 10 angeordnet sind, weisen Anschlüsse 11 für die stationäre Energieversorgung sowie Anschlüsse 12 für die stationäre Meßdatenerfassung und -aufbereitung auf. Damit ist es möglich, sowohl die Energieversorgung zu dem in dem Wälzlager rotierenden Teil, hier einer Welle 14, aufrecht zu erhalten als auch die Meßdaten von der Dünnschichtsensorik im Lagerinnenring 16 berührungslos nach außen zu übertragen.

## Patentansprüche

1. Wälzpaarung mit zwei gegeneinander laufenden, druckbelasteten Wälzelementen (1),
**dadurch gekennzeichnet, daß**
auf der Oberfläche mindestens eines der Wälzelemente (1) mindestens ein Dünnschichtsensor angeordnet ist,
wobei der Dünnschichtsensor eine tribologische Funktionsschicht (8), die den Sensor nach außen abschließt, sowie eine sensorische Schicht (6), die zwischen der Oberfläche des Wälzelementes und der tribologischen Funktionsschicht (8) angeordnet ist, aufweist.

2. Wälzpaarung nach dem vorhergehenden Anspruch, **dadurch gekennzeichnet, daß** zwischen der Oberfläche des Wälzelementes und der sensorischen Schicht (6) eine elektrisch isolierende Schicht (5) angeordnet ist.

3. Wälzpaarung nach einem der vorhergehenden Ansprüche, **dadurch gekennzeichnet, daß** die sensorische Schicht (6) ein Dünnschichtsensorelement enthält.

4. Wälzpaarung nach einem der vorhergehenden Ansprüche, **dadurch gekennzeichnet, daß** die sensorische Schicht (6) eine Dehnungsmeßbrücke, einen piezoelektrischen Dünnschichtsensor und/oder einen piezoresistiven Dünnschichtsensor als Dünnschichtsensorelement enthält.

5. Wälzpaarung nach einem der vorhergehenden Ansprüche, **dadurch gekennzeichnet, daß** auf der Oberfläche ein Array oder Netzwerk aus einzelnen Dünnschichtsensorelementen angeordnet sind.

6. Wälzpaarung nach einem der vorhergehenden Ansprüche, **dadurch gekennzeichnet, daß** die tribologische Funktionsschicht (8) Me:DLC, Titannitrid und/oder Chromnitrid enthält.

7. Wälzpaarung nach einem der vorhergehenden Ansprüche, **dadurch gekennzeichnet, daß** der Dünnschichtsensor ein Kraftsensor, ein Drucksensor, ein Temperatursensor, ein Deformationssensor oder ein Verschleißsensor ist.

8. Wälzpaarung nach einem der vorhergehenden Ansprüche, **dadurch gekennzeichnet, daß** sich zwischen der sensorischen Schicht (6) und der tribologischen Funktionsschicht (8) eine weitere elektrisch isolierende Schicht (7) angeordnet ist.

9. Wälzpaarung nach einem der vorhergehenden Ansprüche, **dadurch gekennzeichnet, daß** die Oberfläche der tribologischen Schicht (8) mit der Oberfläche eines Elementes der Wälzpaarung eine einheitliche, formschlüssige Oberfläche erzeugt.

10. Wälzpaarung nach einem der vorhergehenden Ansprüche, **dadurch gekennzeichnet, daß** der Dünnschichtsensor eine Vorrichtung zur induktiven, optischen Einkopplung von Versorgungsenergie und/oder Auskopplung von Meßsignalen aufweist.

11. Wälzpaarung nach einem der vorhergehenden Ansprüche, **dadurch gekennzeichnet, daß** der Dünnschichtsensor eine Vorrichtung zur Digitalisierung der Meßsignale vor der Auskopplung aufweist.

12. Wälzpaarung nach einem der vorhergehenden Ansprüche, **dadurch gekennzeichnet, daß** der Dünnschichtsensor eine Vorrichtung zur Kodierung der Meßsignale vor der Auskopplung aufweist.

13. Wälzpaarung nach einem der vorhergehenden Ansprüche, **dadurch gekennzeichnet, daß** die Isolierende Schicht, die weitere isolierende Schicht, die sensorische Schicht und/oder die Funktionsschicht jeweils eine Dicke zwischen 1 µm und 10 µm aufweisen.

14. Wälzpaarung nach einem der vorhergehenden Ansprüche, **dadurch gekennzeichnet, daß** sie eine Zahnradpaarung mit zwei ineinandergreifenden Zahnrädern ist.

15. Wälzpaarung nach dem vorhergehenden Anspruch, **dadurch gekennzeichnet, daß** auf mindestens einer Zahnflanke mindestens eines der Zahnräder ein Dünnschichtsensor angeordnet ist.

## Claims

1. Pairing of rolling elements comprising two pressureloaded rolling elements which move towards each other,
**characterised in that**
on the surface of at least one of the rolling elements (1) is arranged at least one thin layer sensor,
and the thin layer sensor comprises a tribologic functional layer (8) which seals the sensor towards the outside and a sensoric layer (6) arranged between the surface of the rolling element and the tribologic functional layer (8).

2. Pairing of rolling elements according to the above claim, **characterised in that** between the surface of the rolling element and the sensoric layer (6) is arranged an electrically insulating layer (5).

3. Pairing of rolling elements according to one of the above claims, **characterised in that** the sensoric layer (6) contains a thin layer sensor element.

4. Pairing of rolling elements according to one of the above claims, **characterised in that** the sensoric layer (6) comprises an expansion measuring bridge, a piezoelectrical thin layer sensor and/or a piezoresistive thin layer sensor as thin layer sensor element.

5. Pairing of rolling elements according to one of the above claims, **characterised in that** on the surface is arranged an array or network of individual thin layer sensor elements.

6. Pairing of rolling elements according to one of the above claims, **characterised in that** the tribologic functional layer (8) contains Me:DLC, titaniumnitride and/or chromium nitride.

7. Pairing of rolling elements according to one of the above claims, **characterised in that** the thin layer sensor is a power sensor, a pressure sensor, a temperature sensor, a deformation sensor or a wear sensor.

8. Pairing of rolling elements according to one of the above claims, **characterised in that** a further electrically insulating layer (7) is arranged between the sensoric layer (6) and the tribologic functional layer (8).

9. Pairing of rolling elements according to one of the above claims, **characterised in that** the surface of the tribologic layer (8) and the surface of an element of the pairing of rolling elements produce a unitary positive surface.

10. Pairing of rolling elements according to one of the above claims, **characterised in that** the thin layer sensor comprises a device for inductive optical connection of supply energy and/or disconnection of measuring signals.

11. Pairing of rolling elements according to one of the above claims, **characterised in that** the thin layer sensor comprises a device for digitalisation of the measuring signals prior to disconnection.

12. Pairing of rolling elements according to one of the above claims, **characterised in that** the thin layer sensor comprises a device for encoding the measuring signals prior to disconnection.

13. Pairing of rolling elements according to one of the above claims, **characterised in that** the insulating layer, the additional insulating layer, the sensoric layer and/or the functional layer have a respective thickness between 1 µm and 10 µm.

14. Pairing of rolling elements according to one of the above claims, **characterised in that** it is a pairing of toothed wheels with two interengaging toothed wheels.

15. Pairing of rolling elements according to the above claim, **characterised in that** on at least one tooth flank of at least one of the toothed wheels is arranged a thin layer sensor.

## Revendications

1. Appariement de corps roulants comportant deux corps roulants (1) circulant en des sens opposés et soumis à une contrainte de pression,
**caractérisé en ce que**
au moins un détecteur à couche mince est disposé sur la surface d'au moins l'un des corps roulants (1),
le détecteur à couche mince portant une couche fonctionnelle tribologique (8) qui forme la terminaison du capteur côté extérieur, ainsi qu'une couche sensible (6) qui est disposée entre la surface du corps roulant et la couche fonctionnelle tribologique (8).

2. Appariement de corps roulants selon la revendication 1, **caractérisé en ce qu'**une couche électriquement isolante (5) est disposée entre la surface du corps roulant et la couche sensible (6).

3. Appariement de corps roulants selon l'une des revendications précédentes, **caractérisé en ce que** la couche sensible (6) contient un élément de capteur à couche mince.

4. Appariement de corps roulants selon l'une des revendications précédentes, **caractérisé en ce que** la couche sensible (6) contient un pont de mesure d'allongement, un capteur piézoélectrique à couche mince et/ou un capteur piézorésistif à couche mince en tant qu'élément de capteur à couche mince.

5. Appariement de corps roulants selon l'une des revendications précédentes, **caractérisé en ce qu'**un ensemble ou un réseau de différents éléments de capteurs à couche mince sont disposés sur la surface.

6. Appariement de corps roulants selon l'une des revendications précédentes, **caractérisé en ce que** la couche fonctionnelle tribologique (8) contient du Me:DLC, du nitrure de titane et/ou du nitrure de chrome.

7. Appariement de corps roulants selon l'une des revendications précédentes, **caractérisé en ce que** le capteur à couche mince est un capteur de force, un capteur de pression, un capteur de température, un capteur de déformation ou un capteur d'usure.

8. Appariement de corps roulants selon l'une des revendications précédentes, **caractérisé en ce qu'**une autre couche électriquement isolante (7) est disposée entre la couche sensible (6) et la couche fonctionnelle tribologique (8).

9. Appariement de corps roulants selon l'une des revendications précédentes, **caractérisé en ce que** la surface de la couche tribologique (8) pourvue de la surface d'un élément de l'appariement de corps roulants produit une surface uniforme de liaison par formes complémentaires.

10. Appariement de corps roulants selon l'une des revendications précédentes, **caractérisé en ce que** le capteur à couche mince comporte un dispositif pour le couplage optique inductif d'une énergie d'alimentation et/ou le découplage de signaux de mesure.

11. Appariement de corps roulants selon l'une des revendications précédentes, **caractérisé en ce que** le capteur à couche mince comporte un dispositif pour numériser les signaux de mesure avant le découplage.

12. Appariement de corps roulants selon l'une des revendications précédentes, **caractérisé en ce que** le capteur à couche mince comporte un dispositif pour coder les signaux de mesure avant le découplage.

13. Appariement de corps roulants selon l'une des revendications précédentes, **caractérisé en ce que** la couche isolante, l'autre couche isolante, la couche sensible et/ou la couche fonctionnelle possèdent respectivement une épaisseur comprise entre 1 µm et 10 µm.

14. Appariement de corps roulants selon l'une des revendications précédentes, **caractérisé en ce qu'**il s'agit d'un appariement de pignons comportant deux pignons qui engrènent réciproquement.

15. Appariement de corps roulants selon l'une des revendications précédentes, **caractérisé en ce qu'**un capteur à couche mince est disposé sur au moins un flanc de dent d'au moins l'un des pignons.
